# EUROPEAN PATENT APPLICATION

(11) **EP 4 659 934 A1**
(43) Date of publication of application: **10.12.2025**
(21) Application number: 24860091.8
(22) Date of filing: 18.06.2024
(51) Int. Cl.: B29C 51/26, B29C 31/00, B29C 31/08, B08B 5/02, H01M 50/105, B29D 99/00, B29L 31/00

(54) **SECONDARY BATTERY MANUFACTURING METHOD AND SECONDARY BATTERY MANUFACTURING APPARATUS**

(30) Priority: 29.08.2023 KR 20230113833; 13.05.2024 KR 20240062322
(71) Applicant: LG Energy Solution, Ltd., Seoul 07335 (KR)
(72) Inventor: JUNG, Woo Jung, Daejeon 34122 (KR)
(74) Representative: Goddar, Heinz J.
(86) International application number: PCT/KR2024/008404
(87) International publication number: WO 2025/048167

(57) **Abstract**

The present invention relates to a secondary battery manufacturing method, and more specifically, relates to a secondary battery manufacturing device and a secondary battery manufacturing method, which can effectively perform pouch cutting and foreign substance removal through a roll transfer process, and continuously perform unit pouch forming. According to one example of the present invention, a secondary battery manufacturing method, and a device using the same may be provided, which is characterized in that the method comprises: a transfer process for supplying a pouch fabric through a roll transfer device; and a slitting process for cutting the transferring pouch fabric in a direction perpendicular to the transfer direction to correspond to a length of a unit pouch, but partially cutting the pouch fabric to exclude both ends in the cutting direction, and the transfer process comprises a both end support transfer process for supporting and transferring uncut portions of both ends excluding the cut portion of the pouch fabric after the slitting process.

## Description

### Technical Field

The present invention relates to a secondary battery manufacturing method, and more specifically, relates to a secondary battery manufacturing device and a secondary battery manufacturing method, which can effectively perform pouch cutting and foreign substance removal through a roll transfer process, and continuously perform unit pouch forming.

### Background Art

Secondary batteries are batteries capable of repeated use through a discharging process converting chemical energy into electrical energy and a charging process converting electrical energy into chemical energy.

Secondary batteries may include nickel-cadmium (Ni-Cd) batteries, nickel-hydrogen (Ni-MH) batteries, lithium-metal batteries, lithium-ion (Li-Ion) batteries, and lithium-ion polymer batteries (Li-Ion Polymer batteries, hereinafter referred to as "LIPB"), and the like.

Lithium secondary batteries have a cycle life of about 500 cycles or more and a short charging time of about 1 to 2 hours or so, and are about 30% to 40% or so lighter compared to nickel-hydrogen batteries, thereby enabling weight saving, and have the highest voltage (30 to 37V) unit cell among existing secondary batteries, and excellent energy densities, so that they can have characteristics optimized for mobile devices.

Lithium secondary batteries can be provided as pouch-type secondary batteries by encapsulating a battery cell with a pouch which is an aluminum encapsulation material.

A pouch-type secondary battery can comprise an electrode assembly accommodated in a pouch, which is an encapsulation material, a lead electrically connected to electrode tabs of electrodes provided in the electrode assembly and extended to the outside of the pouch, and an insulating film electrically insulating the lead.

The pouch is generally formed by a core material in the form of an aluminum thin plate and an insulating film coated on the upper and lower surfaces of the core material. The insulating film is generally a polypropylene (PP) film.

A unit pouch is required to manufacture a single pouch-type secondary battery. The unit pouch is formed through a slitting process of cutting a roll-shaped pouch fabric at regular intervals.

As one example, the width of the pouch fabric may be the same as the width of the single pouch, and the pouch fabric may be cut at intervals corresponding to the length of the single pouch to form the unit pouch.

The slitting of the pouch is performed using a slitting cutter, but there may be a problem that during the slitting process, aluminum fragments, that is, foreign substances, are generated to adhere to the upper and lower surfaces of the pouch. Such foreign substances may cause damage to the pouch when the pouch is transferred through the roll, and then may cause pouch defects during a forming process of changing the shape of the pouch. Of course, if such foreign substances are not properly removed, it is also possible to cause performance degradation of the manufactured pouch-type secondary battery.

Korean Laid-Open Patent Publication No. 10-2021-0047469 (hereinafter, referred to as "prior patent") discloses one example in which the slitting process and the forming process of the pouch are performed sequentially.

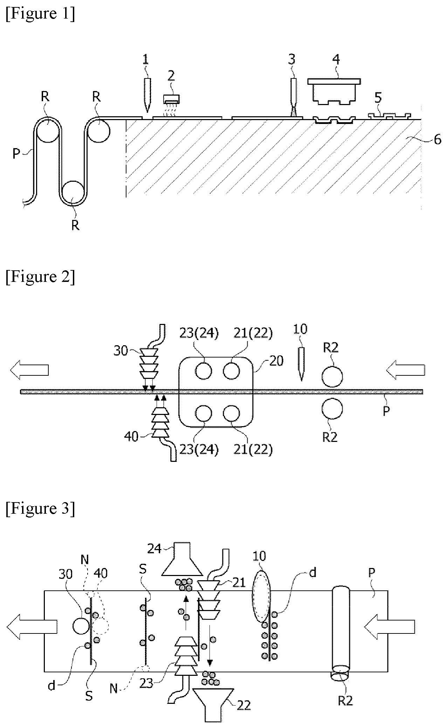

The features disclosed in the prior patent are explained through Figure 1 as follows.

The pouch fabric (P) may be continuously provided through a roll transfer device (R) and may be cut into unit pouches through a slitting cutter (1). At this time, a foreign substance removal device (2) is provided for removal of foreign substances generated by the cutting. The foreign substance removal device (2) is a constitution to suck air, which removes foreign substances from the pouch by suction.

The cut unit pouch is preheated by a preheating lamp (3), and then formed through a forming device (4). The forming device (4) is a device for forming an accommodation portion, i.e., an accommodation space, where an electrode assembly is accommodated through forming. The unit pouch (5) whose pouch forming is completed is then assembled with the electrode assembly through an assembly process.

As illustrated, the pouch fabric (P) is transferred by the roll transfer device (R) to the slitting cutter (1), and then moved on a stage (6) through a separate transfer device. That is, since the cut unit pouch is moved by a picker or linear transfer device, and the like, which is not shown, in a state where it is placed on the stage (6), foreign substance removal may be performed only on the upper surface of the unit pouch. In other words, there is a problem that it is difficult to remove foreign substances that may be attached to the lower surface of the unit pouch during the slitting process.

Furthermore, the pouch fabric (P) is transferred by the roll transfer device only before the slitting process, and thereafter, while the unit pouch is transferred by a separate transfer device, the forming process is performed. Therefore, there is a problem that it is difficult to provide a pouch forming method in which the transfer process of the pouch fabric, the slitting process, and the forming process are performed continuously and organically.

Particularly, in the forming process of forming an accommodation portion in the pouch, complex introduction and ejection devices are required for the introduction, forming, and ejection of the unit pouch, and a process time inevitably increases during this process.

### Disclosure

### Technical Problem

It is an object of the present invention to solve the problems of the conventional secondary battery manufacturing method and device. Particularly, it is intended to solve the problems of the pouch forming method and device which form unit pouches from a pouch fabric.

Through one example of the present invention, it is intended to provide a secondary battery manufacturing method and a secondary battery manufacturing device capable of performing a forming process using a roll transfer device.

Through one example of the present invention, it is intended to provide a secondary battery manufacturing method and a secondary battery manufacturing device capable of effectively removing foreign substances generated upon slitting of a pouch by using a horizontal blower and a vertical blower together.

Through one example of the present invention, it is intended to provide a secondary battery manufacturing method and a secondary battery manufacturing device capable of using a horizontal blower and a vertical blower together by using a roll transfer device.

Through one example of the present invention, it is intended to provide a secondary battery manufacturing method and a secondary battery manufacturing device capable of effectively removing foreign substances from a cut section of a pouch by performing vertical blowing on a pouch in a state where both ends float in the air by a roll transfer device.

Through one example of the present invention, it is intended to provide a secondary battery manufacturing method and a secondary battery manufacturing device in which a slitting process, a blowing process, and a forming process can be performed sequentially and continuously by a roll transfer device.

### Technical Solution

In order to achieve the above-described objects, according to one example of the present invention, a secondary battery manufacturing method may be provided, which is characterized in that the method comprises: a transfer process for supplying a pouch fabric through a roll transfer device; and a slitting process for cutting the transferring pouch fabric in a direction perpendicular to the transfer direction to correspond to a length of a unit pouch, but partially cutting the pouch fabric to exclude both ends in the cutting direction, the transfer process comprises a both end support transfer process for supporting and transferring uncut portions of both ends excluding a cut portion of the pouch fabric after the slitting process.

It is preferable that the transfer process comprises a full support transfer process for supporting and transferring the entire width direction of the pouch fabric before the slitting process.

Through the full support transfer process, the pouch fabric can be stably supported and supplied before the slitting process, and through the both end support transfer process, the uncut portions of both ends except for the cut portion of the pouch fabric are supported, thereby enabling continuous transfer of the pouch fabric and avoidance of the cut portion.

It is preferable that it further comprises a blowing process for removing foreign substances generated in the slitting process through a blower.

The blowing process may comprise a horizontal blowing process for supplying gas in a horizontal direction to the upper and lower surfaces of the pouch fabric transferred through the roll transfer device.

The blowing process may further comprise a vertical blowing process for supplying gas in a vertical direction to the upper and lower surfaces of the pouch fabric transferred through the roll transfer device.

The vertical blowing process may be performed after the horizontal blowing process is performed, or vice versa.

Effective blowing can be performed by performing the blowing in a state where continuity of the pouch fabric is maintained by partial cutting of the pouch fabric.

It may further comprise a forming process for pressurizing the pouch fabric to form an accommodation portion of an electrode assembly.

In the forming process, the introduction and ejection of the pouch fabric may also be performed through the roll transfer device. Therefore, separate introduction and ejection devices are not required.

It is preferable that the forming process is performed after the slitting process and the blowing process.

The slitting process, the blowing process, and the forming process may be performed continuously without interruption of the pouch fabric through the roll transfer device.

The roll transfer device may repeat stopping after transfer by the length of the unit pouch, and the slitting process and the forming process may be performed upon the stopping. That is, they may be performed simultaneously at different locations through different devices.

It may further comprise a cutting process for cutting the uncut portions of the pouch fabric to form the unit pouch. The cutting process may also be performed simultaneously at a location different from the locations of the slitting process and the forming process.

In order to achieve the above-described objects, according to one example of the present invention, a secondary battery manufacturing device may be provided, which is characterized in that the secondary battery manufacturing device comprises: a roll transfer device for supplying and transferring a pouch fabric; and a slitting cutter cutting the transferring pouch fabric in a direction perpendicular to the transfer direction to correspond to a length of a unit pouch, partially cutting the pouch fabric so that both ends in the cutting direction are excluded in cutting, and provided to maintain the transfer of the pouch fabric through the roll transfer device even after cutting, the roll transfer device comprises a full support roll located at the upstream side of the slitting cutter to support the entire width direction of the pouch fabric, and a partial support roll located at the downstream side of the slitting cutter to support the uncut portions of both ends excluding a cut portion of the pouch fabric.

The width of the pouch fabric may be the same as the width of the unit pouch.

It is preferable that it further comprises a blower located at the downstream side of the slitting cutter to remove foreign substances generated by the slitting cutter.

It is preferable that the blower comprises a horizontal blower supplying gas in a horizontal direction to the upper and lower surfaces of the pouch fabric transferred through the roll transfer device to remove foreign substances generated by the slitting cutter.

It is preferable that the blower further comprises a vertical blower supplying gas in a vertical direction to the upper and lower surfaces of the pouch fabric transferred through the roll transfer device to remove foreign substances generated by the slitting cutter.

It is preferable that the vertical blower comprises an upper vertical blower and a lower vertical blower disposed to be spaced apart from each other along the transfer direction through the roll transfer device.

The horizontal blower may be located at the upstream side of the vertical blower, or vice versa.

It is preferable that it further comprises a forming device located at the downstream side of the blower and pressurizing the pouch fabric transferred through the roll transfer device to form an accommodation portion of an electrode assembly.

It is preferable that the partial support roll is located at the downstream side of the forming device.

In order to achieve the above-described objects, according to one example of the present invention, a secondary battery pouch forming device may be provided, which comprises a roll transfer device for supplying and transferring a pouch fabric; a slitting cutter cutting the transferring pouch fabric in a direction perpendicular to the transfer direction to correspond to a length of a unit pouch, partially cutting the pouch fabric so that both ends in the cutting direction are excluded in cutting, and provided to maintain the transfer of the pouch fabric through the roll transfer device even after cutting; a horizontal blower performing removal of foreign substances generated upon the pouch cutting on the upper and lower surfaces of the pouch fabric transferred through the roll transfer device; and a vertical blower performing removal of foreign substances generated upon the pouch cutting on the upper and lower surfaces of the pouch fabric transferred through the roll transfer device.

The pouch fabric may be provided in a roll form, and the pouch fabric may be continuously provided through the roll transfer device while the roll is unwound. In other words, it is continuously transferred through the roll transfer device without interruption of the pouch fabric.

When the slitting cutter completely cuts the pouch fabric in the width direction, the continuous state of the pouch fabric is no longer maintained and unit pouches are formed. In this example, the slitting cutter may cut only the central portion in the width direction of the pouch fabric to form a cut portion. Therefore, uncut portions are formed at both ends in the width direction of the pouch fabric. Therefore, the continuous state of the pouch fabric may be maintained even after passing the slitting cutter. This means that the pouch fabric can be continuously transferred through the roll transfer device after the slitting cutter.

The unit pouch may mean a pouch for forming one secondary battery cell, i.e., a encapsulation material. The pouch fabric may be partially cut at a certain pitch interval corresponding to the unit pouch through the slitting cutter. Later, the uncut portions may be completely cut in a subsequent process through a separate cutter to finally form a unit pouch.

The width of the pouch fabric may be the same as the length or width of the unit pouch. At this time, the partial cutting interval of the pouch fabric may be the same as the length or width of the unit pouch.

The horizontal blower may comprise a blowing nozzle injecting gas on one side and a suction nozzle sucking gas corresponding to the blowing nozzle on the other side. That is, it is possible to suck foreign substances simultaneously while scattering foreign substances.

It is preferable that the blowing nozzle and the suction nozzle are provided in multiple numbers along the transfer direction through the roll transfer device.

It is preferable that the blowing nozzle and the suction nozzle are provided on the upper and lower surfaces of the unit pouch, respectively.

The positions of the blowing nozzle and the suction nozzle may be provided to intersect along the transfer direction through the roll transfer device. That is, the positions of a pair of blowing nozzle and suction nozzle and a pair of neighboring blowing nozzle and suction nozzle may be diametrically opposed. That is, the gas spraying directions of the neighboring blowing nozzle and blowing nozzle may be diametrically opposed.

The vertical blower may comprise an upper vertical blower and a lower vertical blower which are disposed to be spaced apart from each other along the transfer direction through the roll transfer device.

It is preferable that the gas injection centers of the upper vertical blower and the lower vertical blower are provided to be staggered from each other.

The horizontal blower may be positioned in front of the vertical blower. That is, the horizontal blowing may be performed after the vertical blowing is performed along the transfer direction of the pouch fabric. Of course, it may also be opposite.

Meanwhile, foreign substances generated upon the slitting process may be most attached to the cutting line or near the cutting line. Therefore, the horizontal blower and the vertical blower may be provided at positions coinciding with the cutting line.

The blowing through the horizontal blower and the vertical blower may be performed simultaneously with the transfer of the pouch fabric, and may also be performed in a state where the transfer of the pouch fabric is stopped. Of course, the blowing may be performed in all states upon transfer and stop of the pouch fabric. The slitting may be performed upon stopping of the pouch fabric.

The pouch fabric may repeat stopping after movement by 1 pitch corresponding to the width or length of the unit pouch, and the slitting may be performed upon stopping. Then, the slitting may be performed again by stopping after moving by 1 pitch. Therefore, the blower may be provided at positions corresponding to n pitches at the downstream side from the slitting cutter. Here, n may be referred to as a natural number.

Through this, the blower may be positioned to face the cutting line of the pouch, and may effectively perform blowing in the stopped state of the pouch fabric.

The roll transfer device may comprise an unwinding roll rotatably supporting the pouch fabric in a roll state; a first support roll supporting the pouch fabric at the upstream side of the slitting cutter; and a second support roll supporting the pouch fabric at the downstream side of the horizontal blower and the vertical blower.

The slitting process and the blowing process for the pouch fabric may be performed between the first support roll and the second support roll.

The first support roll and the second support roll may be provided to support the entire width of the pouch fabric. Therefore, stable support and transfer of the pouch fabric are possible. Particularly, it is preferable that the first support roll and the second support roll are provided to simultaneously support the upper and lower surfaces of the pouch fabric.

It may be further provided with a forming device for forming an accommodation portion of an electrode assembly in the pouch fabric transferred through the roll transfer device. That is, the slitting process, the blowing process, and the forming process may be performed using transfer through the continuous roll transfer device.

The forming device may further comprise a lower die and an upper press for heat-pressurizing the unit pouch positioned on the lower die.

It may further comprise a third support roll for supporting and transferring the unit pouch at the downstream side of the forming device.

The third support roll may be provided to support the uncut portions of both ends of the unit pouch in the width direction, excluding the cutting through the slitting cutter. That is, the third support roll may be provided to support the pouch fabric by avoiding the accommodation portion of the electrode assembly formed after the forming process of the pouch. That is, the third support roll may be provided to support only both ends of the pouch fabric in the width direction. Of course, the third support roll may be provided to support the upper and lower surfaces of the pouch fabric simultaneously.

A linear transfer device linearly moving the pouch fabric ejected through the third support roll may be further provided.

The linear transfer device may be provided to receive the unit pouch ejected or supplied through the third support roll and on which the forming is performed. On the linear transfer device, the unit pouch may be said to be in a state where it is not completely separated from the adjacent unit pouch. That is, it may be said to be in a state where it is connected through the uncut portion.

Therefore, the unit pouches may be completely separated from each other through the cutting of the uncut portions on the linear transfer device.

After the separation of the unit pouches is performed, the unit pouches may be moved through the linear transfer device, and then may be moved to an assembly process through a separate means such as a picker.

It may comprise a cutter cutting the uncut portion of the unit pouch on the linear transfer device.

The cutter may be provided in four corresponding to four edge portions of the unit pouch. Of course, the unit pouch may be cut after being moved by one pitch, so that two cutters may also be provided.

It is preferable that the roll transfer device is stopped after transferring by the length or width of the unit pouch, and provided to repeat transferring and stopping.

In order to achieve the above-described objects, according to one example of the present invention, a method of forming a pouch-type secondary battery may be provided, which is characterized in that the method comprises: a transfer process for supplying a pouch fabric through a roll transfer device; a slitting process for cutting the transferring pouch fabric in a direction perpendicular to the transfer direction to correspond to a length of a unit pouch; a blowing process for removing foreign substances generated in the slitting process through a blower; and a forming process for forming an accommodation portion of an electrode assembly by pressurizing the pouch fabric, and in order to continuously perform the slitting process, the blowing process, and the forming process through the roll transfer device, it is partially cut in the slitting process so that both ends of the pouch fabric in the cutting direction are excluded from the cutting.

It is preferable that the roll transfer device is provided to repeat stopping after transfer by the length of the unit pouch.

### Advantageous Effects

Through one example of the present invention, it is possible to provide a secondary battery manufacturing method and a secondary battery manufacturing device capable of performing a forming process using a roll transfer device.

Through one example of the present invention, it is possible to provide a secondary battery manufacturing method and a secondary battery manufacturing device capable of effectively removing foreign substances generated upon slitting of a pouch by using a horizontal blower and a vertical blower together.

Through one example of the present invention, it is possible to provide a secondary battery manufacturing method and a secondary battery manufacturing device capable of using a horizontal blower and a vertical blower together by using a roll transfer device.

Through one example of the present invention, it is possible to provide a secondary battery manufacturing method and a secondary battery manufacturing device capable of effectively removing foreign substances from a cut section of a pouch by performing vertical blowing on a pouch in a state where both ends float in the air by a roll transfer device.

Through one example of the present invention, it is possible to provide a secondary battery manufacturing method and a secondary battery manufacturing device in which a slitting process, a blowing process, and a forming process can be performed sequentially and continuously by a roll transfer device.

### Description of Drawings

Figure 1 illustrates the conventional pouch forming device and method,
Figure 2 illustrates a pouch forming device according to one example of the present invention as viewed from the lateral direction,
Figure 3 illustrates the forming device illustrated in Figure 2 as viewed from above,
Figure 4 illustrates another example of positions of a vertical blower and a horizontal blower,
Figure 5 schematically illustrates a pouch forming device and a forming method according to one example of the present invention, and
Figure 6 illustrates a pouch fabric transferred after a forming process as viewed from above.

### Mode for Invention

Hereinafter, with reference to the attached drawings, a pouch forming device and a forming method for a secondary battery according to one example of the present invention will be described in detail.

Figure 2 illustrates a pouch forming device according to one example of the present invention as viewed from a lateral surface of a pouch fabric transferred through a roll transfer device, and Figure 3 illustrates a pouch forming device according to one example of the present invention as viewed from an upper surface of a pouch fabric transferred through a roll transfer device.

The roll transfer device may comprise a first support roll (R2), and the roll transfer device means a device through which the pouch fabric (P) may be continuously connected and transferred between rolls. The transfer may be performed continuously without interruption, and the stopping after transfer at a certain interval may be repeated. Details of the roll transfer device will be described below.

As illustrated in Figures 2 and 3, the pouch fabric (P) may be transferred while being supported by the first support roll (R2), and may be cut through a slitting cutter (10) after passing through the first support roll (R2). The slitting cutter (10) may be positioned at the downstream side of the first support roll (R2) along the transfer direction, and conversely, it may be said that the first support roll (R2) is positioned at the upstream side of the slitting cutter (10).

Here, it is preferable that the slitting cutter (10) does not cut the entire width of the pouch fabric (P). That is, it is preferable that the central portion of the width is cut, but both ends of the width are not cut. More specifically, as shown in Figure 3, the slitting cutter (10) may cut the central portion of the pouch fabric (P) to form a cut portion through a cutting line (S), and uncut portions (N) may be formed at both ends of the cutting line (S).

The continuity of the pouch fabric (P) may be maintained by the uncut portions (N), and thus, even after the slitting, the continuous transfer is possible by the roll transfer device.

The slitting cutter (10) is a constitution for cutting the pouch fabric (P) to form a unit pouch. That is, if the pouch fabric (P) is cut at a certain interval or a certain length, and both ends are cut, the unit pouches may be formed. In other words, the entire width of the pouch fabric (P) may correspond to the length of the unit pouch, and at this time, the cutting interval of the pouch fabric (P), that is, the interval between adjacent cutting line (S) and cutting line (S), may correspond to the width of the unit pouch.

As illustrated, the pouch fabric (P) is supported by the roll transfer device, and thus the slitting cutter (10) cuts the pouch fabric (P) floating in the air. At this time, the generated foreign substances (d) may be placed near the cutting line (S). Particularly, the foreign substances may be attached to the upper and lower surfaces of the pouch fabric (P).

To effectively remove such foreign substances from the pouch fabric (P), a horizontal blower (20) may be provided. The horizontal blower (20) may be positioned in front of the slitting cutter (10). That is, after slitting, foreign substances (d) may be removed through the horizontal blower (20).

The horizontal blower (20) may be provided to remove foreign substances in the horizontal direction from the upper and lower surfaces of the pouch fabric (P) or the unit pouch transferred through the roll transfer device.

The horizontal blower (20) may comprise a blowing nozzle (21, 23) injecting gas from one side and a suction nozzle (22, 24) sucking gas from the other side corresponding to the blowing nozzle (21, 23).

The blowing nozzle (21, 23) may be provided to inject gas in the width direction and the horizontal direction of the pouch fabric (P). The injected gas may be compressed air.

The blowing nozzle (21, 23) may be provided to move in the width direction. That is, it may inject air from one side of the width direction of the pouch fabric (P) and simultaneously move in the other side direction. That is, it may perform the function of gradually pushing out foreign substances.

The suction nozzle (22, 24) may be provided on the opposite side of the blowing nozzle (21, 23), and one blowing nozzle and one suction nozzle may be in one-to-one correspondence while facing each other. The suction nozzle may be provided to be fixed without moving in the width direction of the pouch fabric (P).

Here, to remove foreign substances more effectively in the horizontal direction, pairs of blowing nozzles and suction nozzles may be provided in multiple numbers along the transfer direction. In addition, it is preferable that the directions of injecting and sucking air intersect each other.

In addition, it is preferable that pairs of blowing nozzles and suction nozzles are provided to be symmetrical up and down based on the pouch fabric (P). In addition, it is preferable that the directions of injecting and sucking air are identical to each other.

As one example, the blowing nozzle and the suction nozzle provided up and down at a position close to the slitting cutter (10) may be provided to inject and suck air in the same direction. In addition, the blowing nozzle and the suction nozzle provided up and down far from the slitting cutter (10) may also be provided to inject and suck air in the same direction. However, as shown in Figure 3, it is preferable that the directions of injecting and sucking air are opposite. Through this, it is possible to remove foreign substances more effectively.

Meanwhile, foreign substances may remain even through foreign substance removal in such a horizontal direction. Particularly, there is a possibility that foreign substances may remain in the thickness portion of the cutting line (S).

To remove such foreign substances more effectively, a vertical blower (30, 40) may be provided. The vertical blower (30, 40) may be provided to remove foreign substances in the vertical direction on the upper and lower surfaces of the pouch fabric (P) or the unit pouch transferred through the roll transfer device.

The vertical blower (30, 40) may comprise an upper vertical blower (30) and a lower vertical blower (40). The upper vertical blower (30) may inject gas downward toward the upper surface of the pouch fabric (P), and the lower vertical blower (40) may inject gas upward toward the lower surface of the pouch fabric (P).

Here, it is preferable that the injection centers of the upper vertical blower (30) and the lower vertical blower (40) are not the same. That is, it is preferable that they have a predetermined deviation. Through this, the up and down shaking of the pouch fabric (P) may be generated more effectively. Particularly, based on the cutting line (S), the upper vertical blower may inject gas toward one side adjacent to the cutting line (S), and the lower vertical blower may inject gas toward the other side adjacent to the cutting line (S). At this time, based on the cutting line (S), the pouch fabric (P) on one side may move upward, and the pouch fabric (P) on the other side may move downward. That is, based on the cutting line (S), the pouch fabric (P) may spread up and down, where the cut surface (i.e., the thickness surface of the cut pouch fabric) by the cutting line (S) is affected by the injected gas while being exposed. Then, the uncut portions (N) are formed at both ends of the cutting line (S), so that the spread width of the pouch fabric has a certain limit.

In addition, the pouch fabric (P) may flap up and down, and flow by the vertical blowers (30, 40). At this time, the foreign substances (d) attached to the pouch fabric may be effectively removed while being detached from the fabric (P).

Meanwhile, the vertical blower (30, 40) may be provided to move along the cutting line (S). That is, it may inject gas while moving.

As shown in Figure 3, the horizontal blower (20) and the vertical blower (30, 40) may be provided to remove foreign substances according to the cutting line (S). That is, the cutting line (S) may stop at the positions corresponding to the horizontal blower (20) and the vertical blower (30, 40) without continuously moving.

In other words, the pouch fabric (P) may repeat movement and stopping through the roll transfer device without continuously moving. Between the movement and stopping, the pouch fabric (P) may move only as much as the width of the unit pouch. That is, if the pouch fabric moves by a certain pitch and stops, the cutting line (S) is formed by the slitting cutter (10), and after the cutting is completed, the pouch fabric (P) may move by a certain pitch again and stop, and be cut.

Here, it is preferable that upon stop of the pouch fabric (P), the removal of foreign substances through the horizontal blower and the vertical blower as well as the slitting are also performed. Therefore, it is preferable that the slitting cutter (10), horizontal blower and vertical blower are positioned to be spaced apart by n pitches along the length direction of the pouch fabric (P). Here, n is a natural number.

Ultimately, it is preferable that upon stop of the pouch fabric (P), the slitting cutter driving, horizontal blower driving and vertical blower driving are simultaneously performed at different positions.

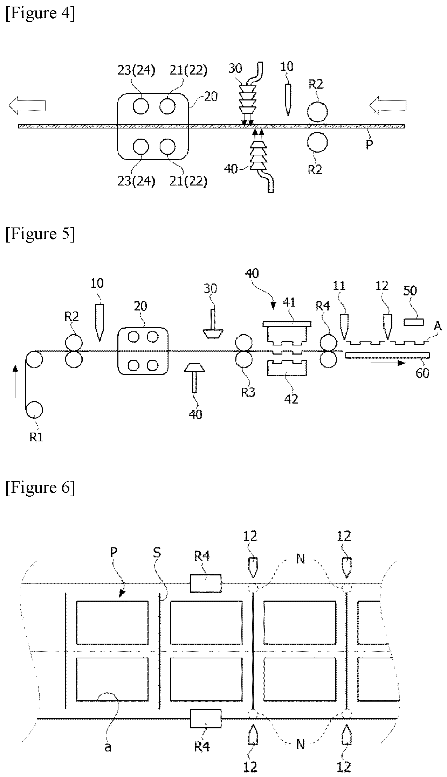

Figure 4 illustrates one example in which the positions of the horizontal blower (20) and the vertical blower (30, 40) illustrated in Figure 3 change with each other. The vertical blower may have a structure that it is difficult to include a suction nozzle for sucking foreign substances. Therefore, foreign substances (d) scattered through the vertical blower (30, 40) may be reattached to the pouch fabric (P). Of course, foreign substances on the cut surface may be effectively removed through the vertical blower.

Therefore, as illustrated in Figure 4, the primary removal of foreign substances through the vertical blower (30, 40) and the secondary removal of foreign substances through the horizontal blower (20) may be very effective. In other words, it is preferable that the horizontal blower (20) is located at the downstream side of the vertical blower (30, 40).

Hereinafter, the roll transfer device (R1 to R4) of the secondary battery manufacturing device according to one example of the present invention, and the manufacturing method will be described in more detail.

As shown, the roll transfer device may comprise an unwinding roll (R1) rotatably supporting a pouch fabric in a roll state. That is, the pouch fabric may be supplied through the unwinding roll (R1). The pouch fabric may be supplied continuously without interruption from the unwinding roll (R1). That is, the transfer process of the pouch fabric may be performed through the drive of the roll transfer device. As described above, it is preferable that the transfer of the pouch fabric through the roll transfer device is performed so that the stopping after transfer at a certain pitch is repeated.

The roll transfer device may comprise a first support roll (R2) supporting the pouch fabric (P) at the upstream side of the slitting cutter (10). The pouch fabric (P) transferred from the unwinding roll (R1) through the first support roll (R2) may be transferred to the slitting cutter (10) stably and continuously.

After the slitting process in which the pouch fabric (P) is partially cut at a certain pitch through the slitting cutter (10), a blowing process in which foreign substances are removed may be performed.

It is preferable that for the blowing process, the horizontal blower (20) and the vertical blower (30, 40) are provided, and these blowers are installed at the preset positions on the transfer path of the pouch fabric (P).

It is preferable that a second support roll (R3) is provided at the downstream side of the horizontal blower (20) and the vertical blower (30, 40). That is, if the roll transfer device comprises the first support roll (R2) and the second support roll (R3), the slitting process of the pouch fabric (P) and the blowing process may be performed between the first support roll and the second support roll. That is, the first support roll and the second support roll preform the function of supporting the pouch fabric upon the slitting process and the blowing process as well as the function of transferring the pouch fabric (P).

According to the present example, a forming process as well as the slitting process and the blowing process may be performed continuously using the roll transfer device.

The forming process may be a process for pressurizing a unit pouch to form an accommodation portion or a groove in which an electrode assembly is accommodated. The unit pouch in the forming process can be said to be in a state where it is not completely separated from the pouch fabric.

To perform the forming process, the forming device (40) may be positioned on the transfer path of the pouch fabric (P). More preferably, the forming process may be performed after the blowing process is performed.

The pouch fabric (P) in which the slitting process and the blowing process are completed may be transferred to be supplied to the forming device (40) through the second support roll (R3). In other words, for supplying and ejecting the pouch to the forming device, it is possible to use the roll transfer device as such, without requiring a separate device.

The forming device may comprise an upper press (41) pressurizing the pouch fabric (P) from the top to the bottom, and a lower die (42) supporting the pouch fabric (P) from the bottom upon pressurization of the upper press (41). Specifically, the upper press (41) may be positioned at the top to be spaced apart from the upper surface of the pouch fabric (P), and the lower die (42) may be positioned at the bottom to be spaced apart from the lower surface of the pouch fabric (P). Then, upon the forming process, the upper press (41) and the lower die (42) move toward the pouch fabric, at this time the pouch fabric interposed between the upper press (41) and the lower die (42) may be subjected to forming. The shape of the upper press (41) and the lower die (42) may be formed to correspond to the profile of the unit pouch on which the forming is completed.

Through such a forming device, the stopped pouch fabric may be subjected to forming upon the forming process, and the pouch fabric may be transferred without interference with the forming device upon completion of the forming process.

The forming device (40) may comprise a stripper (not shown) for fixing both ends or edges of the unit pouch upon forming. Such a stripper may be a part of the lower die (42).

The roll transfer device may comprise a third support roll (R4). The third support roll (R4) may be located at the downstream side of the forming device (40). The pouch fabric may be supported and transferred between the second support roll (R3) and the third support roll (R4), and may also be subjected to forming.

Figure 6 illustrates the pouch fabric (P) in a state where the slitting process and the forming process are completed.

As illustrated, the pouch between the cutting line (S) and the cutting line (S) may be a unit pouch, which must ultimately be completely separated from the adjacent unit pouches. That is, the cutting of the uncut portions (N) must finally be performed. To this end, it is preferable that a cutting process or a separation process, in which the cutting of the uncut portions (N) is performed, is performed after the forming process.

As shown in Figures 5 and 6, when an accommodation portion (a) is formed in the pouch through the forming process, steps are formed on the surface of the pouch. Therefore, it is not easy to support or transfer such steps through a roll. Meanwhile, the accommodation portion (a) is located between the cutting line (S) and the cutting line (S), and a non-forming portion, i.e., a planar portion, for subsequent pouch sealing is formed between the accommodation portion (a) and the cutting line (S).

Similarly, the accommodation portion (a) is formed only at central portion in the width direction of the pouch fabric (P), and a non-forming portion, i.e., a planar portion, is formed at both ends. As described above, the uncut portions (N) are formed at both ends in the width direction of the pouch fabric (P). In other words, the cutting line (S) is formed only at central portion in the width direction of the pouch fabric. Therefore, the pouch fabric (P) may maintain continuity through the uncut portions (N). That is, the pouch fabric (P) may be transferred using the roll transfer device even after the forming process.

To this end, the third support roll (R4) may have a different shape from other support rolls (R2, R3). The first support roll and the second support roll may be provided to support the entire width of the pouch from the top and bottom of the pouch fabric. Therefore, the first support roll and the second support roll may be referred to as full support rolls. However, the third support roll may be provided to support only both ends of the pouch width. That is, it may be provided to support and transfer the pouch fabric while avoiding the accommodation portion (a). Of course, the third support roll may be provided to support the top and bottom of the pouch. Therefore, the third support roll may be referred to as a both-end support roll or a partial support roll.

Here, the process of transferring the pouch fabric through the roll transfer device is referred to as a transfer process, where the transfer process may be subdivided according to the shape and position of the support roll. As one example, the transfer through the full support roll, such as the first support roll or the second support roll, may be referred to as a full support transfer process, and the transfer through the partial support roll, such as the third support roll, may be referred to as a partial support transfer process.

Meanwhile, the accommodation portion (a) may be formed in two in the width direction of the pouch fabric (P). The portion indicated by the center line between the two accommodation portions (a) may be referred to as a portion to be folded when the electrode assembly and the unit pouch are assembled later.

After the pouch forming process for forming the accommodation portion (a) is completed, the pouch fabric (P) may be transferred to the next process while being supported through the third support roll (R4).

After the forming process is completed, the cutting process or separation process of the uncut portions (N) as described above may be performed.

The pouch fabric (P) transferred through the third support roll (R4) may be finally formed into unit pouches through the cutter (11, 12). That is, the cutter (11, 12) may be provided to cut the uncut portions (N) at four corner portions of the unit pouch, respectively. Of course, the unit pouch may also be formed by cutting only two edge portions.

The pouch fabric (P) transferred through the third support roll (R4) may be supplied to a linear transfer device (60), and the unit pouches may be individually completely separated by the cutter on the linear transfer device (60).

The linear transfer device (60) may be provided with a pallet or jig, and the like for supporting and transferring them per unit pouch.

The unit pouches completely separated by the cutters (11, 12) may be transferred to the linear transfer device (60), and then transferred to the subsequent assembly process, i.e., the process in which the electrode assembly and the unit pouch are assembled.

A picker (50) for adsorbing the individually separated unit pouches to move them to the assembly process position may be provided near the linear transfer device (60).

As described above, the slitting process, the blowing process, the forming process, and the separation process may be performed in a state where the pouch fabric (P) is not interrupted through the roll transfer devices (R1 to R4). Particularly, vertical blowing as well as horizontal blowing may also be performed in the blowing process, so that it is possible to remove foreign substances generated upon the slitting very effectively.

In addition, due to such a roll transfer device and partial cutting slitting features, slitting, blowing, forming, and separation may be performed simultaneously, whereby it is possible to perform the pouch forming very efficiently and continuously. Particularly, since the roll transfer device may be used throughout the pouch forming process, it becomes possible to implement a forming device that is efficient and easy to install.

### Industrial Applicability

It is included in the Detailed Description of Invention.

## Claims

1. A secondary battery manufacturing method, **characterized in that** the method comprises:
a transfer process for supplying a pouch fabric through a roll transfer device; and
a slitting process for cutting the transferring pouch fabric in a direction perpendicular to a transfer direction to correspond to a length of a unit pouch, but partially cutting the pouch fabric to exclude both ends in the cutting direction,
the transfer process comprises a both end support transfer process for supporting and transferring uncut portions of both ends excluding a cut portion of the pouch fabric after the slitting process.

2. The secondary battery manufacturing method according to claim 1,
**characterized in that** the transfer process comprises a full support transfer process for supporting and transferring the entire width direction of the pouch fabric before the slitting process.

3. The secondary battery manufacturing method according to claim 2,
**characterized by** further comprising a blowing process for removing foreign substances generated in the slitting process through a blower.

4. The secondary battery manufacturing method according to claim 3,
**characterized in that** the blowing process comprises a horizontal blowing process for supplying gas in a horizontal direction to the upper and lower surfaces of the pouch fabric transferred through the roll transfer device.

5. The secondary battery manufacturing method according to claim 4,
**characterized in that** the blowing process further comprises a vertical blowing process for supplying gas in a vertical direction to the upper and lower surfaces of the pouch fabric transferred through the roll transfer device.

6. The secondary battery manufacturing method according to claim 5,
**characterized in that** the vertical blowing process is performed after the horizontal blowing process is performed.

7. The secondary battery manufacturing method according to claim 3,
**characterized by** further comprising a forming process for pressurizing the pouch fabric to form an accommodation portion of an electrode assembly.

8. The secondary battery manufacturing method according to claim 7,
**characterized in that** the forming process is performed after the slitting process and the blowing process.

9. The secondary battery manufacturing method according to claim 8,
**characterized in that** the slitting process, the blowing process, and the forming process are performed continuously without interruption of the pouch fabric through the roll transfer device.

10. The secondary battery manufacturing method according to claim 9,
**characterized in that** the roll transfer device repeats stopping after transfer by the length of the unit pouch, and the slitting process and the forming process are performed upon the stopping.

11. The secondary battery manufacturing method according to claim 7,
**characterized by** further comprising a cutting process for cutting the uncut portions of the pouch fabric to form the unit pouch.

12. A secondary battery manufacturing device **characterized in that** the secondary battery manufacturing device comprises:
a roll transfer device for supplying and transferring a pouch fabric; and
a slitting cutter cutting the transferring pouch fabric in a direction perpendicular to a transfer direction to correspond to a length of a unit pouch, partially cutting the pouch fabric so that both ends in the cutting direction are excluded in cutting, and provided to maintain the transfer of the pouch fabric through the roll transfer device even after cutting,
the roll transfer device comprises a full support roll located at the upstream side of the slitting cutter to support the entire width direction of the pouch fabric, and a partial support roll located at the downstream side of the slitting cutter to support the uncut portions of both ends excluding a cut portion of the pouch fabric.

13. The secondary battery manufacturing device according to claim 12,
**characterized in that** the width of the pouch fabric is the same as the width of the unit pouch.

14. The secondary battery manufacturing device according to claim 12,
further comprising a blower located at the downstream side of the slitting cutter to remove foreign substances generated by the slitting cutter.

15. The secondary battery manufacturing device according to claim 14,
**characterized in that** the blower comprises a horizontal blower supplying gas in a horizontal direction to the upper and lower surfaces of the pouch fabric transferred through the roll transfer device to remove foreign substances generated by the slitting cutter.

16. The secondary battery manufacturing device according to claim 15,
**characterized in that** the blower further comprises a vertical blower supplying gas in a vertical direction to the upper and lower surfaces of the pouch fabric transferred through the roll transfer device to remove foreign substances generated by the slitting cutter.

17. The secondary battery manufacturing device according to claim 16,
**characterized in that** the vertical blower comprises an upper vertical blower and a lower vertical blower disposed to be spaced apart from each other along the transfer direction through the roll transfer device.

18. The secondary battery manufacturing device according to claim 16,
**characterized in that** the horizontal blower is located at the upstream side of the vertical blower.

19. The secondary battery manufacturing device according to claim 14,
**characterized by** further comprising a forming device located at the downstream side of the blower and pressurizing the pouch fabric transferred through the roll transfer device to form an accommodation portion of an electrode assembly.

20. The secondary battery manufacturing device according to claim 19,
**characterized in that** the partial support roll is located at the downstream side of the forming device.
